# EUROPÄISCHE PATENTSCHRIFT

(11) **EP 2 338 081 B1**
(45) Veröffentlichungstag und Bekanntmachung des Hinweises auf die Patenterteilung: **30.05.2012**
(21) Anmeldenummer: 09778797.2
(22) Anmeldetag: 23.09.2009
(51) Int. Cl.: G02F 1/01, G02B 6/35, G02B 26/02

(54) **OPTISCHER MODULATOR, INTEGRIERT-OPTISCHER SCHALTKREIS UND VERFAHREN ZUM MODULIEREN EINES OPTISCHEN SIGNALS**
OPTICAL MODULATOR, INTEGRATED OPTICAL CIRCUIT, AND METHOD FOR MODULATING AN OPTICAL SIGNAL
MODULATEUR OPTIQUE, CIRCUIT DE COMMUTATION OPTIQUE INTÉGRÉ ET PROCÉDÉ DE MODULATION D'UN SIGNAL OPTIQUE

(30) Priorität: 24.09.2008 DE 102008049164
(43) Veröffentlichungstag der Anmeldung: 29.06.2011
(73) Patentinhaber: Fraunhofer-Gesellschaft zur Förderung der angewandten Forschung e.V., 80686 München (DE)
(72) Erfinder: HEIDRICH, Helmut, 12357 Berlin (DE); LÜTZOW, Peter, 10781 Berlin (DE)
(74) Vertreter: Pfenning, Meinig & Partner GbR
(86) Internationale Anmeldenummer: PCT/EP2009/007049
(87) Internationale Veröffentlichungsnummer: WO 2010/034522

(56) Entgegenhaltungen:
- US-A- 5 787 212
- US-A1- 2002 039 467
- AKIO HIGO ET AL: "Design and Fabrication of Photonic MEMS Waveguide Modulators" OPTICAL MEMS AND NANOPHOTONICS, 2007 IEEE/LEOS INTERNATIONAL CONFERENC E ON, IEEE, PI, 1. August 2007 (2007-08-01), Seiten 173-174, XP031155624 ISBN: 978-1-4244-0641-8
- HAN L H ET AL: "Wireless bimorph micro-actuators by pulsed laser heating" SENSORS AND ACTUATORS A, ELSEVIER SEQUOIA S.A., LAUSANNE, CH, Bd. 121, Nr. 1, 31. Mai 2005 (2005-05-31), Seiten 35-43, XP004972816 ISSN: 0924-4247
- BAGLIO S ET AL: "Novel microactuators based on a photo-thermo-mechanical actuation strategy" PROCEEDINGS OF IEEE SENSORS 2002. ORLANDO, FL, JUNE 12 - 14, 2002; [IEEE INTERNATIONAL CONFERENCE ON SENSORS], NEW YORK, NY : IEEE, US, Bd. 1, 12. Juni 2002 (2002-06-12), Seiten 192-197, XP010605081 ISBN: 978-0-7803-7454-6

## Beschreibung

Die Erfindung betrifft einen optischen Modulator, der z.B. als optischer Schalter Verwendung finden kann, einen integriert-optischen Schaltkreis, der einen derartigen optischen Modulator enthält, sowie ein Verfahren zum Modulieren eines optischen Signals mit Hilfe eines derartigen Modulators.

Um Schaltkreise zu realisieren, die rein optisch funktionieren und dabei eine gewisse Schaltungskomplexität zeigen, ist es erforderlich, einen Verlauf eines Lichtsignals in Abhängigkeit von einem anderen Lichtsignal zu steuern. Dafür sind bislang noch keine zufriedenstellenden Lösungen bekannt.

Im Artikel *"*Design and Fabrication of Photonic MEMS Waveguide Modulators" (in Proc. IEEE/LEOS Int. Conference on Optical MEMS and Nanophotonics, 2007, Seiten 173-174) der Autoren Akio Higo et al. wird ein optischer Modulator beschrieben, umfassend einen ersten Wellenleiter für ein zu modulierendes Signal und ein mikroelektro-mechanisches System, das über entsprechende elektronische Mittel mit einem elektrischen Steuersignal versorgt wird, wobei das mikroelektro-mechanische System einen Anker aufweist, der von einem länglichen schmalen Träger getragen wird und sich an der Spitze des Trägers befindet. Des Weiteren ist der Träger des aus diesem Artikel bekannten optischen Modulators zum Verändern einer Kopplung zwischen dem ersten Wellenleiter und dem Anker auslenkbar. Ein ähnlicher optischer Modulator ist in US 5 787 212 A offenbart.

Aus den Artikeln *"*Wireless bimorph micro-actuators by pulsed laser heating" (Sensors and Actuators A 121 (2005), Seiten 35-43) der Autoren Li-Hsin Han et al. und "Novel microactuators based on a photo-thermo-mechanical actuation strategy" (in Proc. IEEE Int. Conference on Sensors, 2002, Seiten 192-197) der Autoren S. Baglio et al. sind jeweils photo-thermo-mechanische Mikroaktuatoren bekannt, die einen zweischichtigen Träger ("cantilever") aufweisen, wobei sich der Träger durch Absorption von Licht in einer der Schichten erwärmt, was wiederum ein Verbiegen des Trägers verursacht, da die Schichten des Trägers unterschiedliche Wärmeausdehnungskoeffizienten aufweisen, was wiederum zu einem Bimetall-Effekt führt. Die aus diesen Artikeln bekannten photo-thermo-mechanischen Mikroaktuatoren werden allerdings durch Licht in Freistrahloptik angeregt, d.h., diese Mikroaktuatoren weisen keinen Lichtwellenleiter zur Führung des Steuerlichts auf. Des Weiteren betreffen die in diesen Artikeln beschriebenen photo-thermo-mechanischen Mikroaktuatoren keine Modulatoren, sondern erwähnen Anwendungen wie fernbediente und aktivierte Mikropumpen oder Mikropropeller oder Mikrospiegel, sowie biologische Detektoren, oder autonome Mikrosysteme wie Roboter, die zum Beispiel zur Instandhaltung von Pipelines eingesetzt werden können.

Der Erfindung liegt also die Aufgabe zugrunde, eine Vorrichtung zu entwickeln, mit der sich ein Lichtsignal in Abhängigkeit von einem anderen Lichtsignal steuern lässt, wobei die Vorrichtung mit möglichst geringem Aufwand herstellbar, zuverlässig und zur Verwendung auch in sehr kompakten optischen Schaltkreisen geeignet sein soll. Der Erfindung liegt ferner die Aufgabe zugrunde, ein entsprechendes Verfahren zum Modulieren eines Lichtsignals vorzuschlagen.

Diese Aufgabe wird erfindungsgemäß gelöst durch einen optischen Modulator mit den Merkmalen des Hauptanspruchs und durch einen integriert-optischen Schaltkreis gemäß Anspruch 13, der einen solchen optischen Modulator enthält, sowie durch ein Verfahren mit den Merkmalen des Anspruchs 15. Vorteilhafte Ausgestaltungen und Weiterentwicklungen der Erfindung ergeben sich mit den Merkmalen der Unteransprüche.

Die Erfindung sieht vor, dass der optische Modulator einen ersten Wellenleiter für ein zu modulierendes Signal, einen zweiten Wellenleiter für ein Steuersignal und einen Hilfswellenleiter umfasst, wobei der Hilfswellenleiter von einem Träger getragen wird, der zum Verändern einer Kopplung zwischen dem ersten Wellenleiter und dem Hilfswellenleiter auslenkbar ist, wobei der Träger ferner zwei Schichten unterschiedlicher Wärmeausdehnungskoeffizienten umfasst und der zweite Wellenleiter so geführt ist, dass eine Temperatur des Trägers zumindest in einem Teilbereich durch von dem zweiten Wellenleiter transportiertes Licht manipulierbar ist. Der Träger, der vorzugsweise in Form eines Auslegers oder Cantilevers gestaltet ist, kann so aufgrund eines Bimetalleffekts in Abhängigkeit von dem optischen Steuersignal, das durch den zweiten Wellenleiter transportiert wird, fotothermisch deformiert werden. Damit ändert sich - typischerweise mit einem Abstand - die optische Kopplung zwischen dem ersten Wellenleiter und dem Hilfswellenleiter, was wiederum zu einer entsprechenden Modulation einer Transmissionseigenschaft des ersten Wellenleiters führt und damit zu einer Modulation des von diesem ersten Wellenleiter transportierten Signals. Da die optische Kopplung zwischen dem ersten Wellenleiter und dem Hilfswellenleiter sehr empfindlich von dem sich mit dem Steuersignal ändernden Abstand abhängt, so dass je nach aktuellem Wert dieses Abstands das zu modulierende Signal z.B. nahezu vollständig aus dem ersten Wellenleiter aus- und in den Hilfswellenleiter eingekoppelt werden oder - eventuell nach mehrmaligem Überkoppeln - nahezu ungehindert den ersten Wellenleiter passieren kann, eignet sich der vorgeschlagene optische Modulator z.B. zum optischen Schalten des im ersten Wellenleiter transportierten Signals oder für eine sehr effektive Verstärkung einer Zeitabhängigkeit des Steuersignals. Dabei hat dieser optische Modulator einen sehr einfachen Aufbau, lässt sich dementsprechend einfach herstellen und zeigt eine vorteilhaft hohe Zuverlässigkeit.

Um eine möglichst deutliche Auslenkung des Trägers in Abhängigkeit von einer durch das Steuersignal verursachten Erwärmung des Trägers zu erreichen, ist es von Vorteil, wenn die zwei genannten Schichten des Trägers um einen Faktor von mindestens 1,5, vorzugsweise um einen Faktor von mindestens 2, verschiedene Wärmeausdehnungskoeffizienten haben. Das führt zu einem entsprechend ausgeprägten Bimetalleffekt, aufgrund dessen sich der Träger verbiegen kann, um den Abstand zwischen dem ersten Wellenleiter und dem Hilfswellenleiter zu verändern.

Ein besonders einfacher und zuverlässiger Aufbau des optischen Modulators ergibt sich, wenn ein lichtabsorbierender Abschnitt des zweiten Wellenleiters durch einen Teil des Trägers gebildet oder von dem Träger getragen wird. Der genannte Abschnitt des zweiten Wellenleiters kann eine Beschichtung tragen, die in diesem Abschnitt eine erhöhte Absorption von in dem zweiten Wellenleiter transportierten Licht bewirkt, um zu erreichen, dass die Temperatur des Trägers oder eines Teils des Trägers effektiv in Abhängigkeit von dem Steuersignal gesteuert werden kann. Bei dieser Beschichtung kann es sich um eine der beiden genannten Schichten unterschiedlicher Wärmeausdehnungskoeffizienten handeln. Der gewünschte Bimetalleffekt bei gleichzeitig erhöhter Absorption im entsprechenden Abschnitt des zweiten Wellenleiters kann beispielsweise dadurch realisiert werden, dass die genannte Beschichtung aus Gold oder einem anderen Metall gebildet wird. Dabei kann die Beschichtung z.B. mit einer Schichtdicke von zwischen 10 nm und 100 nm ausgeführt sein.

Das in dem ersten Wellenleiter transportierte Licht lässt sich dann besonders gut durch eine abstandsabhängige Kopplung zwischen dem ersten Wellenleiter und dem Hilfswellenleiter modulieren, wenn der Hilfswellenleiter zumindest längs einer Koppelstrecke parallel zu dem ersten Wellenleiter verläuft. Diese Koppelstrecke kann z.B. eine Länge von zwischen 0,1 mm und 1 mm haben, damit der optische Modulator einerseits kompakte Abmessungen behält und andererseits eine hinreichende starke durch eine Überlappung evaneszenter Felder verursachte Kopplung zwischen dem ersten Wellenleiter und dem Hilfswellenleiter erreicht wird. Abhängig von der Länge des Hilfswellenleiters oder der Koppelstrecke kann der optische Modulator dabei so dimensioniert sein, dass der erste Wellenleiter und der Hilfswellenleiter einen Abstand oder einen geringsten Abstand von zwischen 0,1 µm und 2 µm haben, wenn sich der Träger in einer Ruhelage befindet. Bei der Kopplung zwischen dem ersten Wellenleiter und dem Hilfswellenleiter handelt es sich also vorzugsweise um eine so genannte evaneszente Kopplung, die durch ein Übersprechen evaneszenter Felder verursacht wird. Dadurch wird eine vorteilhaft hohe Sensitivität des den Modulator im ersten Wellenleiter verlassenden Lichts auf - durch Auslenkung des Trägers bewirkte - Abstandsänderungen zwischen erstem Wellenleiter und Hilfswellenleiter erreicht. Das gilt insbesondere, wenn die Koppelstrecke, längs derer der erste Wellenleiter und der Hilfswellenleiter in engem Abstand nebeneinander verlaufen, so lang ist, dass sie ein Mehrfaches einer Koppellänge überspannt, wobei als Koppellänge die kleinste Länge bezeichnet sei, bei der - bei gegebenem Abstand zwischen den Wellenleitern - ein größtmöglicher Lichtanteil überkoppelt.

Ein einfacher Aufbau des optischen Modulators ergibt sich, wenn der Hilfswellenleiter zumindest in der Koppelstrecke senkrecht zu dem absorbierenden Abschnitt des zweiten Wellenleiters verläuft, der durch einen Teil des Trägers gebildet oder von dem Träger getragen wird und der typischerweise ein Ende des zweiten Wellenleiters bildet.

Um eine schnelle Modulation des vom ersten Wellenleiter transportierten Lichts mit einer ausreichenden Modulationstiefe zu ermöglichen, kann der typischerweise als Cantilever ausgeführte Träger beispielsweise mit einer Länge von zwischen 30 µm und 500 µm ausgeführt sein. Insbesondere wenn die Länge des Trägers in diesem Bereich liegt, kann der Träger zweckmäßigerweise eine Dicke von zwischen 0,1 µm und 1 µm haben, um einerseits hinreichend stabil und andererseits leicht genug auslenkbar zu sein.

Eine bevorzugte Ausführung des optischen Modulators sieht vor, dass er auf Basis eines Substrats realisiert ist, bei dem es sich um ein beispielsweise durch einen Wafer und einen Teil eines Wafers gebildetes Halbleitersubstrat handeln kann. Dieses Substrat kann zwei durch jeweils eine als optischer Puffer wirkende Trennschicht voneinander und vom Substrat getrennte Wellenleiterschichten tragen. Die Wellenleiterschichten können dabei so strukturiert sein, dass sie Wellenleiterkerne der Wellenleiter bilden. Die Wellenleiterschichten können dabei neben einem Wellenleiterkern des entsprechenden Wellenleiters auch jeweils eine oder mehrere Schichten umfassen, die den Wellenleiterkern tragen. Anstelle einer Ausführung mit zwei durch eine Trennschicht voneinander getrennte Wellenleiterschichten, von denen typischerweise eine den ersten Wellenleiter umfasst oder bildet, während die andere den zweiten Wellenleiter und den Hilfswellenleiter umfasst oder bildet, kann auch eine Anordnung gewählt werden, bei der der erste Wellenleiter, der zweite Wellenleiter und der Hilfswellenleiter in einer einzigen Wellenleiterschicht realisiert sind. Das Substrat kann beispielsweise aus Silizium gebildet sein. Auch für die Herstellung der Wellenleiterschicht oder mindestens eine der Wellenleiterschichten bietet sich ein Halbleiter wie Silizium wegen dessen guter Strukturierbarkeit und Materialeigenschaften an. Alternativ kann auch ein Polymer oder ein anderes Dielektrikum zur Bildung des Substrats und/oder mindestens einer der Wellenleiterschichten verwendet werden. Sofern eine Wellenleiterschicht aus einem Polymer gebildet wird, kann ein Wellenleiterkern des entsprechenden Wellenleiters aus einem anderen Material in dieses Polymer eingelegt sein.

Die beispielsweise aus SiO₂ gebildete Trennschicht, die die Wellenleiterschichten voneinander oder mindestens eine Wellenleiterschicht vom Substrat trennt, kann in einer Umgebung des Trägers, der in diesem Fall einen Teil der Wellenleiterschicht oder eine der Wellenleiterschichten umfasst oder durch einen Teil der Wellenleiterschicht oder eine der Wellenleiterschichten gebildet ist, entfernt sein, um eine Auslenkbarkeit des Trägers zu gewährleisten. Der entsprechende Teil der Trennschicht kann dazu weggeätzt sein. Die beiden Wellenleiter oder der Hilfswellenleiter können jeweils als Rippenwellenleiter ausgeführt sein. Stattdessen kann die jeweilige Wellenleiterschicht oder jene Schicht, die einen Wellenleiterkern des entsprechenden Wellenleiters bildet, in einer Umgebung des Wellenleiters auch vollständig entfernt sein, so dass von dieser Schicht nur der Wellenleiter selbst stehen bleibt.

Ein optischer Modulator beschriebener Art ist insbesondere dazu geeignet, einen Teil eines komplexeren integriert-optischer Schaltkreises zu bilden, der zweckmäßigerweise vollständig oder zumindest teilweise auf dem selben Substrat realisiert ist, wie der optische Modulator.

Mit dem beschriebenen Modulator oder der intergriertoptischen Schaltung, die einen solchen Modulator umfasst, kann ein optischen Signals in vorteilhafter Weise durch ein optisches Steuersignal moduliert werden, indem zu modulierendes Licht so in den ersten Wellenleiter eingekoppelt wird, dass es in Längsrichtung durch den ersten Wellenleiter propagiert, während ein als Steuersignal dienendes zeitabhängiges Lichtsignal so in den zweiten Wellenleiter eingekoppelt wird, dass es in Längsrichtung durch den zweiten Wellenleiter propagiert, wobei der Träger des Hilfswellenleiters durch das zeitabhängige Lichtsignal ausgelenkt und das in den ersten Wellenleiter eingekoppelte Licht dadurch moduliert wird. Zum Einkoppeln des zu modulierenden Lichts in den ersten Wellenleiter kann dabei eine optisch mit dem ersten Wellenleiter gekoppelte Lichtquelle dienen, die so angeordnet ist, dass aus dieser Lichtquelle austretendes Licht in Längsrichtung durch den ersten Wellenleiter propagiert. Das Steuersignal kann dementsprechend durch eine optisch mit dem zweiten Wellenleiter gekoppelte Lichtquelle in den zweiten Wellenleiter eingekoppelt werden, die so angeordnet ist, dass aus dieser Lichtquelle austretendes Licht in Längsrichtung durch den zweiten Wellenleiter propagiert, den es direkt oder natürlich auch auf Umwegen erreichen kann.

Ausführungsbeispiele der Erfindung werden nachfolgend anhand der Fign. 1 bis 4 erläutert. Es zeigen
- Fig. 1: eine Aufsicht auf einen optischen Modulator in einer Ausführung der Erfindung,
- Fig. 2: einen Querschnitt durch den optischen Modulator aus Fig. 1 an einer dort mit A-A bezeichneten Stelle,
- Fig. 3: eine Aufsicht auf ein anderes Ausführungsbeispiel für einen optischen Modulator vorgeschlagener Art und
- Fig. 4: einen Querschnitt durch den optischen Modulator aus Fig. 3 an einer Stelle, die dort mit A-A gekennzeichnet ist.

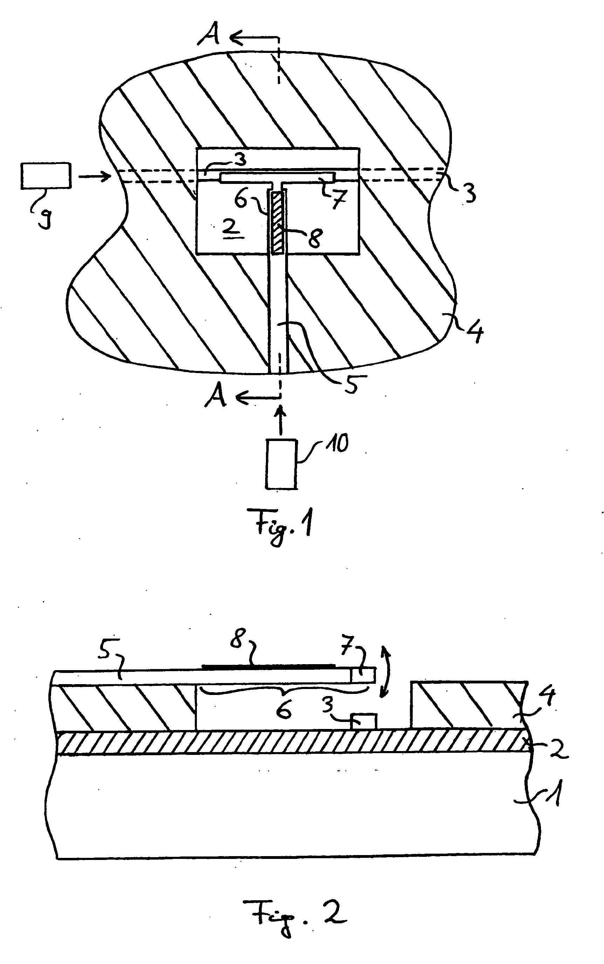

Der optische Modulator aus den Fign. 1 und 2 ist auf Basis eines Substrats 1 realisiert, das durch einen Teil eines Siliziumwafers gebildet ist. Dieser optische Modulator kann Teil einer komplexeren integriert-optischen Schaltung sein, die weitere auf demselben Substrat 1 realisierte optische Komponenten umfasst.

Auf dem Substrat 1 ist eine Trennschicht 2 angeordnet, die als optischer Puffer dient und aus SiO₂ gebildet ist. In einer Abwandlung des beschriebenen Ausführungsbeispiels kann die Trennschicht 2 auch aus einem Polymer gebildet sein.

Über die Trennschicht 2 ist ein erster Wellenleiter 3 für ein zu modulierendes optisches Signal geführt. Dieser erste Wellenleiter 3 ist aus einer Wellenleiterschicht aus Silizium gebildet, die durch eine entsprechende Strukturierung in einer Umgebung des ersten Wellenleiters 3 und eventuell vorgesehener weiterer Wellenleiter der integriert-optischen Schaltung vollständig oder nahezu vollständig weggeätzt ist. Statt Silizium kann selbstverständlich auch ein anderes Material mit einem hinreichend hohen Brechungsindex, wie beispielsweise SiNₓ, ein Polymer oder ein in ein Polymer eingebetteter Wellenleiterkern zur Bildung des ersten Wellenleiters 3 dienen.

Über der Trennschicht 2 ist eine weitere Trennschicht 4 angeordnet, die ebenfalls aus SiO₂ gebildet ist und den ersten Wellenleiter 3 und gegebenenfalls andere Bereiche der entsprechenden Wellenleiterschicht zumindest bereichsweise überdeckt. Auch die weitere Trennschicht 4 könnte stattdessen z.B. aus einem Polymer gebildet sein. Die Trennschicht 4, die ebenfalls als optischer Puffer fungiert, trennt die den ersten Wellenleiter 3 bildende Wellenleiterschicht von einem zweiten Wellenleiter 5, der im vorliegenden Ausführungsbeispiel ebenfalls aus Silizium gebildet ist und zur Führung eines optischen Steuersignals dient, in Abhängigkeit von dem das im ersten Wellenleiter 3 geführte Signal modulierbar ist. Auch der zweite Wellenleiter 5 könnte stattdessen aus einem anderen Material gebildet sein, beispielsweise aus SiNₓ oder durch einen in ein Polymer eingebetteten Wellenleiterkern.

Ein letzter Abschnitt des zweiten Wellenleiters 5 mündet in einen Ausleger 6, der auch als Cantilever bezeichnet werden kann und der einen Hilfswellenleiter 7 trägt, wobei der Hilfswellenleiter 7 senkrecht zu dem genannten Abschnitt des zweiten Wellenleiters 5 und parallel zum ersten Wellenleiter 3 verläuft. Dabei ist der Hilfswellenleiter 7 aus dem gleichen Material gebildet wie der zweite Wellenleiter 5, mit dem er aus einer gemeinsamen Wellenleiterschicht gebildet ist.

Der Hilfswellenleiter 7 hat eine Länge von zwischen 0,2 und 0,5 mm und befindet sich in einem Abstand von etwa 1 µm vom ersten Wellenleiter 3, wenn sich der Ausleger 6 in einer spannungsfreien Ruhelage befindet. Der Ausleger 6, der eine Länge von zwischen 50 µm und 100 µm und eine Dicke von etwa 0,5 µm hat, ist aus der genannten Ruhelage heraus auslenkbar in einer Weise, die in Fig. 2 durch einen Doppelpfeil veranschaulicht ist. Dabei verändert sich durch eine Auslenkung des Auslegers 6 der Abstand zwischen dem Hilfswellenleiter 7 und dem ersten Wellenleiter 3. Diese Auslenkung lässt sich durch das im zweiten Wellenleiter 5 transportierte Steuersignal steuern. Zu diesem Zweck ist im Bereich des Auslegers 6 eine etwa 50 nm dicke Beschichtung 8 aus Gold auf dem zweiten Wellenleiter 5 angeordnet. Diese Beschichtung hat nicht nur einen signifikant anderen Wärmeausdehnungskoeffizienten als der zweite Wellenleiter 5, sondern bewirkt auch eine deutliche Absorption des im zweiten Wellenleiter 5 transportierten Lichts in dessen letztem Abschnitt, der einen Teil des Auslegers 6 bildet. Das hat zur Folge, dass eine Temperatur des Auslegers 6 zumindest in einer Umgebung der Beschichtung 8 durch das vom zweiten Wellenleiter 5 transportierte Licht steuerbar ist, wobei durch diese Temperatur wiederum die Auslenkung des Auslegers 6 gesteuert wird, indem sich der Ausleger 6 aufgrund eines Bimetalleffekts verbiegt, der durch die unterschiedlichen Wärmeausdehnungskoeffizienten des zweiten Wellenleiters 5 und der Beschichtung 8 verursacht wird. Um ein solches Verbiegen des Auslegers 6 zu ermöglichen, ist die Trennschicht 4 in einer Umgebung des Auslegers 6 weggeätzt, so dass auch der erste Wellenleiter 3 in einer Umgebung des Hilfswellenleiters 7 freigelegt ist.

Aufgrund des geringen Abstands zwischen dem ersten Wellenleiter 3 und dem Hilfswellenleiter 7 überlappen sich die evaneszenten Felder des ersten Wellenleiters 3 und des Hilfswellenleiters 7, so dass zwischen beiden eine optische Kopplung besteht, deren Stärke empfindlich vom genauen Wert des genannten Abstands abhängt. Da dieser Abstand wiederum von einer Intensität des im zweiten Wellenleiter 5 transportierten Lichts abhängt, erlaubt der beschriebene optische Modulator ein Modulieren des im ersten Wellenleiter 3 transportierten Lichts in Abhängigkeit vom Steuersignal, das in den zweiten Wellenleiter 5 eingespeist wird. Auf diese Weise kann der optische Modulator z.B. als optischer Schalter oder zum variablen Abschwächen, beispielsweise zum Verstärken einer Zeitabhängigkeit optischer Signale, verwendet werden.

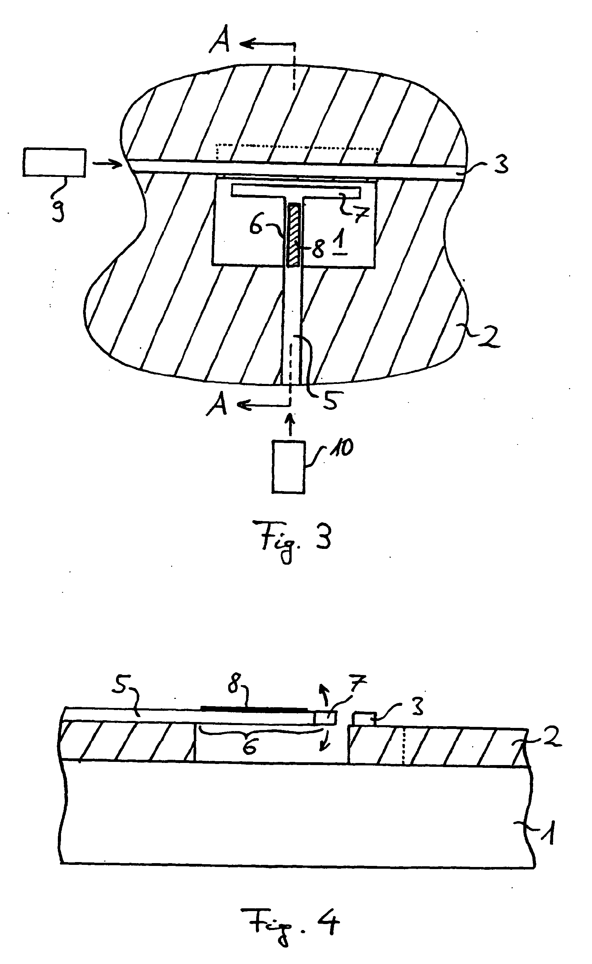

In den Fign. 3 und 4 ist ein ähnlicher optischer Modulator gezeigt, der in gleicher Weise funktioniert, wobei entsprechende Merkmale wieder mit denselben Bezugszeichen versehen sind und nicht mehr im Einzelnen erläutert werden. Abweichungen zu dem zuvor beschriebenen Ausführungsbeispiel ergeben sich lediglich dadurch, dass hier beide Wellenleiter 3 und 5 in einer einzigen Ebene geführt sind, so dass der erste Wellenleiter 3 für das zu modulierende Signal und der vom Ausleger 6 getragene Hilfswellenleiter 7 nicht übereinander, sondern nebeneinander verlaufen. Dementsprechend ist bei dem in den Fign. 3 und 4 gezeigten optischen Modulator nur eine einzige Trennschicht 2 vorgesehen, die das Substrat 1 von einer Wellenleiterschicht trennt, in der sowohl der erste Wellenleiter 3 als auch der zweite Wellenleiter 5 für das Steuersignal und der Hilfswellenleiter 7 realisiert sind. Die Trennschicht 2 ist in einer Umgebung des Auslegers 6 ausgespart, um dessen Auslenkung zu ermöglichen. Durch gepunktete Linie ist in den Fign. 3 und 4 angedeutet, dass die Trennschicht 2 alternativ auch in einem größeren Bereich ausgespart sein kann, so dass der erste Wellenleiter 3 in einer Umgebung des Hilfswellenleiters 7, der eine Koppelstrecke definiert frei schwebend verläuft.

Bei Abwandlungen der in den Figuren gezeigten optischen Modulatoren kann der Ausleger 6 auch zwei Arme aufweisen, die an jeweils einem Ende des Hilfswellenleiters 7 angreifen, so dass der Hilfswellenleiter 7 nicht durch ein mittig angreifendes Ende des zweiten Wellenleiters 5 gestört wird. Dazu könnte der zweite Wellenleiter 5 z.B. mittels eines Y-Koppler gegabelt oder mit einer erst hinter dem absorbierenden Abschnitt mit der Beschichtung 8 angeordneten Gabelung ausgeführt sein.

Die vorgeschlagenen Maßnahmen erlauben ein Schalten oder Modulieren von Lichtsignalen in integriert-optischen Schaltungen durch Steuerungs-Lichtsignale unter Ausnutzung fotothermischer Verbiegungen von Cantileverstrukturen. Dazu wird ein Steuerungs-Lichtsignal mittels des zweiten Wellenleiters 5 auf einen durch den Ausleger 6 gebildeten Cantilever geleitet. Dieser Cantilever, anstelle dessen auch eine andere bewegliche mikromechanische Struktur verwendet werden kann, ist derart beschichtet oder auf andere Weise so beschaffen, dass das Steuerungs-Lichtsignal deutlich absorbiert wird. Dadurch wird das Steuerungs-Lichtsignal in Wärme umgewandelt und führt zu einer Verbiegung des Cantilevers. Ein am freien Ende des Cantilevers und vorzugsweise senkrecht zu diesem befestigtes Wellenleiterstück, das hier als Hilfswellenleiter 7 bezeichnet worden ist, wird dadurch an dem ersten Wellenleiter 3 angenähert oder von diesem entfernt in Abhängigkeit von einem in beschriebener Weise fotothermisch induzierten Auslenkungszustand des Cantilevers. Ein im ersten Wellenleiter 3 geführtes Lichtsignal koppelt dabei mit dem Wellenleiterstück, dass den Hilfswellenleiter 7 bildet. Durch Veränderung des Koppelabstands zwischen dem Hilfswellenleiter 7 und dem ersten Wellenleiter 3 lässt sich das im ersten Wellenleiter 3 geführte Lichtsignal variabel abschwächen oder auch komplett aus diesem auskoppeln, je nach Stärke der fotothermisch induzierten Verbiegung des Cantilevers.

Das so modulierte Lichtsignal wird dazu durch eine in den Figuren 1 und 3 nur schematisch dargestellte erste Lichtquelle 9 so in den ersten Wellenleiter 3 eingekoppelt, dass es in Längsrichtung durch den ersten Wellenleiter 3 propagiert. Das zeitabhängige Steuerungs-Lichtsignal wird durch eine ebenfalls nur schematisch dargestellte zweite Lichtquelle 10 so in den zweiten Wellenleiter 5 eingekoppelt, dass es in Längsrichtung durch den zweiten Wellenleiter 5 propagiert. Der Träger des Hilfswellenleiters 7 wird dabei durch das zeitabhängige Steuerungs-Lichtsignal ausgelenkt, so dass das in den ersten Wellenleiter 3 eingekoppelte Lichtsignal, bei dem es sich zunächst um zeitlich konstantes Licht handeln kann, dadurch moduliert wird und den Modulator mit einer entsprechenden Zeitabhängigkeit an einem der ersten Lichtquelle 9 abgewandten Ende des ersten Wellenleiters 3 verlässt. Bei den Lichtquellen 9 und 10 kann es sich z.B. um Leuchtdioden oder Laserlichtquellen, insbesondere um Laserdioden, handeln. Diese Lichtquellen 9 und 10 können dabei Bestandteile des Modulators oder des den Modulator umfassenden integriert-optischen Schaltkreises bilden.

## Patentansprüche

1. Optischer Modulator, umfassend einen ersten Wellenleiter (3) für ein zu modulierendes Signal, einen zweiten Wellenleiter (5) für ein Steuersignal und einen Hilfswellenleiter (7), wobei der Hilfswellenleiter (7) von einem Träger getragen wird, der zum Verändern einer Kopplung zwischen dem ersten Wellenleiter (3) und dem Hilfswellenleiter (7) auslenkbar ist, wobei der Träger ferner zwei Schichten unterschiedlicher Wärmeausdehnungskoeffizienten umfasst und der zweite Wellenleiter (5) so geführt ist, dass eine Temperatur des Trägers zumindest in einem Teilbereich durch von dem zweiten Wellenleiter (5) transportiertes Licht manipulierbar ist.

2. Optischer Modulator nach Anspruch 1, **dadurch gekennzeichnet, dass** er eine optisch mit dem zweiten Wellenleiter (5) verbundene Lichtquelle (10) zum Einkoppeln des optischen Steuersignals in den zweiten Wellenleiter (5) aufweist.

3. Optischer Modulator nach einem der Ansprüche 1 oder 2, **dadurch gekennzeichnet, dass** ein Licht absorbierender Abschnitt des zweiten Wellenleiters (5) durch einen Teil des Trägers gebildet ist oder von dem Träger getragen wird.

4. Optischer Modulator nach Anspruch 3, **dadurch gekennzeichnet, dass** der genannte Abschnitt des zweiten Wellenleiters (5) eine Beschichtung (8) trägt, die in diesem Abschnitt eine erhöhte Absorption von in dem zweiten Wellenleiter (5) transportiertem Licht bewirkt.

5. Optischer Wellenleiter nach Anspruch 4, **dadurch gekennzeichnet, dass** die Beschichtung (8) eine der beiden Schichten unterschiedlicher Wärmeausdehnungskoeffizienten bildet.

6. Optischer Modulator nach einem der Ansprüche 4 oder 5, **dadurch gekennzeichnet, dass** die Beschichtung (8) aus Gold oder einem anderen Metall gebildet ist und/oder eine Dicke von zwischen 10 nm und 100 nm hat.

7. Optischer Modulator nach einem der Ansprüche 1 bis 6, **dadurch gekennzeichnet, dass** er auf Basis eines Substrats (1) realisiert ist, das zwei durch jeweils eine Trennschicht (2,4) voneinander und vom Substrat getrennte Wellenleiterschichten trägt.

8. Optischer Modulator nach Anspruch 7, **dadurch gekennzeichnet, dass** das Substrat (1) und/oder mindestens eine der Wellenleiterschichten aus einem Halbleiter oder einem Dielektrikum gebildet ist.

9. Optischer Modulator nach einem der Ansprüche 7 oder 8, **dadurch gekennzeichnet, dass** die Trennschicht (2, 4) in einer Umgebung des einen Teil einer der Wellenleiterschichten umfassenden oder durch einen Teil einer der Wellenleiterschichten gebildeten Trägers entfernt ist.

10. Optischer Modulator nach einem der Ansprüche 1 bis 9, **dadurch gekennzeichnet, dass** der Hilfswellenleiter (7) zumindest längs einer Koppelstrecke parallel zu dem ersten Wellenleiter (3) verläuft.

11. Optischer Modulator nach einem der Ansprüche 1 bis 10, **dadurch gekennzeichnet, dass** der erste Wellenleiter (3) und der Hilfswellenleiter (7) in einer Ruhelage des Trägers einen Abstand von zwischen 0,1 µm und 2 µm haben.

12. Optischer Modulator nach einem der Ansprüche 1 bis 11, **dadurch gekennzeichnet, dass** der Träger eine Länge von zwischen 30 µm und 500 µm und/oder eine Dicke von zwischen 0,1 µm und 1 µm hat.

13. Integriert-optischer Schaltkreis, enthaltend einen optischen Modulator nach einem der Ansprüche 1 bis 12.

14. Integriert-optischer Schaltkreis nach Anspruch 13, **dadurch gekennzeichnet, dass** er eine optisch mit dem ersten Wellenleiter (3) verbundene Lichtquelle (9) zum Einkoppeln von zu modulierendem Licht in den ersten Wellenleiter (3) und/oder eine optisch mit dem zweiten Wellenleiter (5) verbundene Lichtquelle (10) zum Einkoppeln des optischen Steuersignals in den zweiten Wellenleiter (5) umfasst.

15. Verfahren zum Modulieren eines optischen Signals mittels eines Modulators nach einem der Ansprüche 1 bis 12 oder mittels eines integriert-optischen Schaltkreises nach einem der Ansprüche 13 oder 14, wobei zu modulierendes Licht so in den ersten Wellenleiter (3) eingekoppelt wird, dass es in Längsrichtung durch den ersten Wellenleiter (3) propagiert, während ein als Steuersignal dienendes zeitabhängiges Lichtsignal so in den zweiten Wellenleiter (5) eingekoppelt wird, dass es in Längsrichtung durch den zweiten Wellenleiter (5) propagiert, wobei der Träger des Hilfswellenleiters (7) durch das zeitabhängige Lichtsignal ausgelenkt und das in den ersten Wellenleiter (3) eingekoppelte Licht dadurch moduliert wird.

## Claims

1. An optical modulator, including a first waveguide (3) for a signal to be modulated, a second waveguide (5) for a control signal and an auxiliary waveguide (7), wherein the auxiliary waveguide (7) is held by a carrier which can be deflected to change a coupling between the first waveguide (3) and the auxiliary waveguide (7), wherein the carrier furthermore includes two layers of different coefficients of thermal expansion and the second waveguide (5) is conducted in such a way that a temperature of the carrier can be manipulated at least in a partial region by light transported by the second waveguide (5).

2. An optical modulator in accordance with claim 1, **characterized in that** it has a light source (10) optically connected to the second waveguide (5) for coupling the optical control signal into the second waveguide (5).

3. An optical modulator in accordance with one of the claims 1 or 2, **characterized in that** a light absorbing section of the second waveguide (5) is formed by a part of the carrier or is carried by the carrier.

4. An optical modulator in accordance with either of the claim 3, **characterized in that** the named section of the second waveguide (5) carries a coating (8) which effects an increased absorption of light transported in the second waveguide (5) in this section.

5. An optical waveguide in accordance with claim 4, **characterized in that** the coating (8) forms one of the two layers of different coefficients of thermal expansion.

6. An optical modulator in accordance with either of the claims 4 or 5, **characterized in that** the coating (8) is formed from gold or from a different metal and/or has a thickness of between 10 nm and 100 nm.

7. An optical modulator in accordance with one of the claims 1 to 6, **characterized in that** it is implemented on the basis of a substrate (1) which carries two waveguide layers separated from one another and from the substrate by a respective separating layer (2, 4).

8. An optical modulator in accordance with claim 7, **characterized in that** the substrate (1) and/or at least one of the waveguide layers is formed from a semiconductor or from a dielectric.

9. An optical modulator in accordance with either of the claims 7 or 8, **characterized in that** the separating layer (2, 4) is removed in a vicinity of the carrier including a part of one of the waveguide layers or formed by a part of one of the waveguide layers.

10. An optical modulator in accordance with one of the claims 1 to 9, **characterized in that** the auxiliary waveguide (7) extends parallel to the first waveguide (3) at least along a coupling path.

11. An optical modulator in accordance with one of the claims 1 to 10 **characterized in that** the first waveguide (3) and the auxiliary waveguide (7) have a spacing of between 0.1 µm and 2 µm in a position of rest of the carrier.

12. An optical modulator in accordance with one of the claims 1 to 11, **characterized in that** the carrier has a length of between 30 µm and 500 µm and/or a thickness of between 0.1 µm and 1 µm.

13. An integrated-optical circuit, comprising an optical modulator in accordance with one of the claims 1 to 12.

14. An integrated-optical circuit in accordance with claim 13, **characterized in that** it includes a light source (9) optically connected to the first waveguide (3) for coupling light to be modulated into the first waveguide (3) and/or a light source (10) optically connected to the second waveguide (5) for coupling the optical control signal into the second waveguide (5).

15. A method for modulating an optical signal by means of a modulator in accordance with one of the claims 1 to 12 or by means of an integrated-optical circuit in accordance with either of the claims 13 or 14, wherein light to be modulated is coupled into the first waveguide (3) so that it propagates through the first waveguide (3) in the longitudinal direction, whereas a time-dependent light signal serving as a control signal is coupled into the second waveguide (5) so that it propagates through the second waveguide (5) in the longitudinal direction, wherein the carrier of the auxiliary waveguide (7) is deflected by the time-dependent light signal and the light coupled into the first waveguide (3) is thereby modulated.

## Revendications

1. Modulateur optique, comprenant un premier guide d'ondes (3) pour un signal à moduler, un second guide d'ondes (5) pour un signal de commande et un guide d'ondes auxiliaire (7), dans lequel le guide d'ondes auxiliaire (7) est porté par un support, qui peut être dévié pour modifier un couplage entre le premier guide d'ondes (3) et le guide d'ondes auxiliaire (7), dans lequel le support comprend en outre deux couches de coefficients de dilatation thermique différents et le second guide d'ondes (5) est guidé de sorte qu'une température du support puisse être manipulée au moins dans une zone partielle par la lumière transportée par le second guide d'ondes (5).

2. Modulateur optique selon la revendication 1, **caractérisé en ce qu'**il présente une source de lumière (10) raccordée optiquement au second guide d'ondes (5) pour l'injection du signal de commande optique dans le second guide d'ondes (5).

3. Modulateur optique selon l'une quelconque des revendications 1 ou 2, **caractérisé en ce qu'**une section absorbant une lumière du second guide d'ondes (5) est formée par une partie du support ou est portée par le support.

4. Modulateur optique selon la revendication 3, **caractérisé en ce que** ladite section du second guide d'ondes (5) porte un revêtement (8) qui provoque, dans cette section, une absorption accrue de la lumière transportée dans le second guide d'ondes (5).

5. Guide d'ondes optique selon la revendication 4, **caractérisé en ce que** le revêtement (8) forme une des deux couches de coefficients de dilatation thermique différents.

6. Modulateur optique selon l'une quelconque des revendications 4 ou 5, **caractérisé en ce que** le revêtement (8) est formé d'or ou d'un autre métal et/ou a une épaisseur comprise entre 10 nm et 100 nm.

7. Modulateur optique selon l'une quelconque des revendications 1 à 6, **caractérisé en ce qu'**il est réalisé à base d'un substrat (1), qui porte deux couches de guide d'ondes respectivement séparées l'une de l'autre et du substrat par une couche de séparation (2,4).

8. Modulateur optique selon la revendication 7, **caractérisé en ce que** le substrat (1) et/ou au moins une des couches de guide d'ondes est formé(e) ou sont formés d'un semi-conducteur ou d'un diélectrique.

9. Modulateur optique selon l'une quelconque des revendications 7 ou 8, **caractérisé en ce que** la couche de séparation (2, 4) est éloignée dans un environnement du support comprenant une partie d'une des couches de guide d'ondes ou formé par une partie d'une des couches de guide d'ondes.

10. Modulateur optique selon l'une quelconque des revendications 1 à 9, **caractérisé en ce que** le guide d'ondes auxiliaire (7) s'étend au moins le long d'un trajet de couplage parallèlement au premier guide d'ondes (3).

11. Modulateur optique selon l'une quelconque des revendications 1 à 10, **caractérisé en ce que** le premier guide d'ondes (3) et le guide d'ondes auxiliaire (7) présentent, en position de repos du support, une distance comprise entre 0,1 µm et 2 µm.

12. Modulateur optique selon l'une quelconque des revendications 1 à 11, **caractérisé en ce que** le support a une longueur comprise entre 30 µm et 500 µm et/ou une épaisseur comprise entre 0,1 µm et 1 µm.

13. Circuit optique intégré, contenant un modulateur optique selon l'une quelconque des revendications 1 à 12.

14. Circuit optique intégré selon la revendication 13, **caractérisé en ce qu'**il comprend une source de lumière (9) raccordée optiquement au premier guide d'ondes (3) pour l'injection de lumière à moduler dans le premier guide d'ondes (3) et/ou une source de lumière (10) raccordée optiquement au second guide d'ondes (5) pour l'injection du signal de commande optique dans le second guide d'ondes (5).

15. Procédé pour moduler un signal optique au moyen d'un modulateur selon l'une quelconque des revendications 1 à 12 ou au moyen d'un circuit optique intégré selon l'une quelconque des revendications 13 ou 14, dans lequel de la lumière à moduler est injectée dans le premier guide d'ondes (3) de telle sorte qu'elle se propage dans la direction longitudinale à travers le premier guide d'ondes (3), tandis qu'un signal lumineux dépendant du temps et faisant office de signal de commande est injecté dans le second guide d'ondes (5) de telle sorte qu'il se propage dans la direction longitudinale à travers le second guide d'ondes (5), dans lequel le support du guide d'ondes auxiliaire (7) est dévié par le signal lumineux dépendant du temps et la lumière injectée dans le premier guide d'ondes (3) est ainsi modulée.
